# EUROPÄISCHE PATENTSCHRIFT

(11) **EP 1 940 660 B1**
(45) Veröffentlichungstag und Bekanntmachung des Hinweises auf die Patenterteilung: **25.05.2011**
(21) Anmeldenummer: 06793638.5
(22) Anmeldetag: 19.09.2006
(51) Int. Cl.: B60S 1/34

(54) **SCHEIBENWISCHERARM**
WINDSCREEN WIPER ARM
BRAS D'ESSUIE-GLACE

(30) Priorität: 10.10.2005 DE 102005048344
(43) Veröffentlichungstag der Anmeldung: 09.07.2008
(73) Patentinhaber: ROBERT BOSCH GMBH, 70442 Stuttgart (DE)
(72) Erfinder: WILMS, Christian, B-3582 Koersel-Beringen (BE); VERELST, Hubert, B-3300 Tienen (BE); BUBBA, Marcello, B-3001 Heverlee (BE)
(86) Internationale Anmeldenummer: PCT/EP2006/066502
(87) Internationale Veröffentlichungsnummer: WO 2007/042377

(56) Entgegenhaltungen:
- WO-A-2005/009810
- DE-A1- 10 259 479
- DE-C1- 4 442 527
- DE-C1- 4 442 527
- GB-A- 252 338
- GB-A- 252 338
- US-A- 2 493 527
- US-A- 3 387 316
- US-A- 3 387 316
- US-A- 3 999 278

## Beschreibung

### Stand der Technik

Die Erfindung betrifft einen Scheibenwischerarm mit einer Wischerstange zum Anbringen eines Wischerblatts mit oder ohne Spoiler.

Bekannte Scheibenwischer für Fahrzeugscheiben weisen einen Scheibenwischerarm auf, der aus einem Befestigungsteil und einem über ein Abklappgelenk daran angelenkten Gelenkteil mit einer Wischerstange aufgebaut ist. An die Wischerstange ist ein Wischerblattelement ebenfalls angelenkt, indem das freie Ende der Wischerstange in ein Gelenk- Anschlussstück am Wischerblattelement greift. Das so gebildete Gelenk führt das Wischerblattelement mit vorgebbarem Anpressdruck während der Schwenkbewegung des Scheibenwischers über die Fahrzeugscheibe. Dabei weist das Wischerblattelement insbesondere eine aufwendige Halterungsvorrichtung für sein Gummiprofilelement auf. Für manche Gegebenheiten kann ein derartig aufgebauter Federwischarm zu aufwendig sein.

Aus der US-A-2,493,527, der WO 2005/009810 A, der US 3,387,316, der GB 252,338 und der DE 4442527 C1 sind verschiedene bogenförmig ausgestaltete Scheibenwischerarme bekannt.

Der Erfindung liegt die Aufgabe zugrunde, einen Scheibenwischerarm der eingangs genannten Art hinsichtlich seiner Konstruktion bei weitgehendem Funktionserhalt zu vereinfachen.

Diese Aufgabe wird durch einen Scheibenwischerarm gemäß Anspruch 1 gelöst. Vorteilhafte Ausführungsformen sind in den abhängigen Ansprüchen angegeben.

Dadurch, dass sich die Wischerstange aus einem frei abstehenden, ersten bogenförmigen Wischerstangenabschnitt mit einem ersten Krümmungsverlauf, an dem das Wischerblatt mit oder ohne Spoiler anbringbar ist, und aus mindestens einem zweiten bogenförmigen Wischerstangenabschnitt mit einem zweiten bogenförmigen Krümmungsverlauf zusammensetzt, der sich an den ersten Wischerstangenabschnitt unter Bildung einer Abknickstelle anschließt, ist eine gelenkfreie Wischerstange bereitgestellt, die sich während der Schwenkbewegung des Scheibenwischerarms dennoch mit ausreichend großem Anpressdruck an eine Fahrzeugscheibe federnd andrücken lässt. Denn durch den zweiten Wischerstangenabschnitt mit der Abknickstelle im Übergangsbereich zum ersten Wischerstangenabschnitt des erfindungsgemäßen Scheibenwischerarms lässt sich trotz dem Fehlen eines echten Gelenks eine ausreichend hohe Anpressdruckkraft wie bei einer Wischerstange mit Gelenk auf die Fahrzeugscheibe im Schwenkbetrieb ausüben. Durch die Gelenkfreiheit und Einteiligkeit der Wischerstange lässt sich zudem Gewicht einsparen, d.h. der Scheibenwischerarm ist in Leichtbauweise herstellbar. Da der Scheibenwischerarm somit nur wenige Komponenten aufweist, lässt er sich kostengünstig und schnell in großen Stückzahlen fertigen. Aufgrund der einstückigen Ausbildung der Wischerstange ist diese gegenüber mechanischen Beanspruchungen weitgehend unempfindlich. Außerdem ist deren Lagerhalterung vereinfacht. Ferner ist es einfacher möglich, den Scheibenwischerarm mit der reduzierten Anzahl von Komponenten an der jeweiligen Schwenkvorrichtung eines Fahrzeugs zu montieren und wieder zu lösen. Insbesondere entfällt der Zusammenbau bzw. das Zusammenstecken von Befestigungsteil, Abklappgelenk, Gelenkteil, Wischerstange, und Anschlussstück am Wischerblatt, wie dies bei einem herkömmlichen Scheibenwischerarm erforderlich wäre. Stattdessen genügt es jetzt in vorteilhafter Weise, den erfindungsgemäßen Scheibenwischerarm aus dem einteiligen Wischerstangenarm mit dem ersten und dem mindestens zweiten Wischerstangenabschnitt und einem wechselbaren Anschlusselement zum Ankoppeln an eine Schwenkvorrichtung, insbesondere an einen Motorantrieb, zusammenzusetzen. Dabei ist das eigentliche Wischerblatt insbesondere als Gummiprofilelement ausgebildet und am ersten Wischerstangenabschnitt zweckmäßigerweise vormontiert, oder es lässt sich dort in vorteilhafter Weise wechselbar aufstecken. Am Gummiprofilelement des Wischerblatts kann dabei in vorteilhafter Weise auch ein Spoiler bzw. Windabweiser vorgesehen sein.

Ferner kann der erfindungsgemäße Scheibenwischerarm in vorteilhafter Weise mit einer schmaleren Silhouette als ein traditioneller Scheibenwischerarm mit einem Gelenk zwischen seinem Wischerblattelement und Wischerarm konstruiert werden. Denn am ersten Wischerstangenabschnitt kann das Wischerblatt schmaler angebracht werden, so dass für den Fahrer eines Kraftfahrzeugs nur ein schmaler Wischerstreifen sichtbar ist. Dadurch ist das Blickfeld des Fahrers eines Kraftfahrzeugs bei der Wischbewegung des erfindungsgemäßen Scheibenwischerarms über die Frontscheibe oder Fondscheibe des Kraftfahrzeugs weniger beeinträchtigt. Zusätzlich wird das Styling des Scheibenwischerarms verbessert.
Weiterhin ist auch die Aerodynamik des erfindungsgemäßen Scheibenwischerarms verbessert. Denn unerwünschte Abhebbewegungen des Wischerblattelements von der Fahrzeugscheibe durch Anhebbewegungen des Wischerblattelements am Gelenk- Anschlussstück der Wischerstange wie z.B. aufgrund von Fahrtwind ist aufgrund der Einteiligkeit des erfindungsgemäßen Scheibenwischerarms nun nicht mehr möglich. Dadurch sind insbesondere "Rüttel- oder Rattereffekte" herkömmlicher Federwischarme weitgehend vermieden. Auch sind negative aerodynamische Interferenzen, wie sie zwischen dem Wischerblattelement und dem Spoiler eines herkömmlichen Federwischarms auftreten können, vermieden. Weiterhin verschwinden auch Wassersprüheffekte und Wasserschlieren, die bei einem herkömmlichen Federwischarm durch das bisherige Anschlussgelenk zwischen dessen Wischerblattelement und der Wischerstange hervorgerufen werden können. Da beim erfindungsgemäßen Scheibenwischerarm entlang dessen Längserstreckung keine "Unterbrechungselemente" wie das Anschlussstück beim konventionellen Federwischarm vorhanden sind, wird eine Störung oder Umlenkung des Wasserpfads unterhalb dem Wischerblatt bei dessen Wischbewegung über die zu wischende Fahrzeugscheibe weitgehend vermieden. Eine großflächige Verteilung des Wassers über die Fahrzeugscheibe, das mit dem Wischerblatt entlang dessen Schwenkweg über die Fahrzeugscheibe gezielt akkumuliert, d.h. zusammengewischt wird, ist somit weitgehend vermieden.

Sonstige Weiterbildungen der Erfindung sind in den Unteransprüche wiedergegeben.

Die Erfindung und ihre Weiterbildungen werden nachfolgend anhand von Zeichnungen näher erläutert.

Es zeigen:
- Figur 1: schematisch in perspektivischer Dar- stellung ein nicht beanspruchten Ausführungsbeispiel eines Scheibenwischerarms im unbelasteten Zu- stand,
- Figur 2: schematisch das Profil des ersten Scheibenwischerarms von Figur 1 in ei- ner Seitenansicht,
- Figur 3: schematisch in Seitenansicht den ersten Scheibenwischerarm von Figur 2 im An- druckzustand auf einer Fahrzeugscheibe,
- Figur 4: als Detail der Figur 3 in schematischer Seitenansicht das Anschlusselement des ersten Scheibenwischerarms zum Ankop- peln an eine Schwenkvorrichtung, und
- Figur 5: in schematischer Seitenansicht einen Teilabschnitt eines Scheibenwi- scherarms der Erfindung im Andruckzustand auf eine Fahrzeugscheibe, der gegenüber dem ers- ten Scheibenwischerarm der Figuren 1 mit 4 hinsichtlich seines Aufhängungs- und Ankopplungsmechanismus an eine Schwenkvorrichtung modifiziert ist.

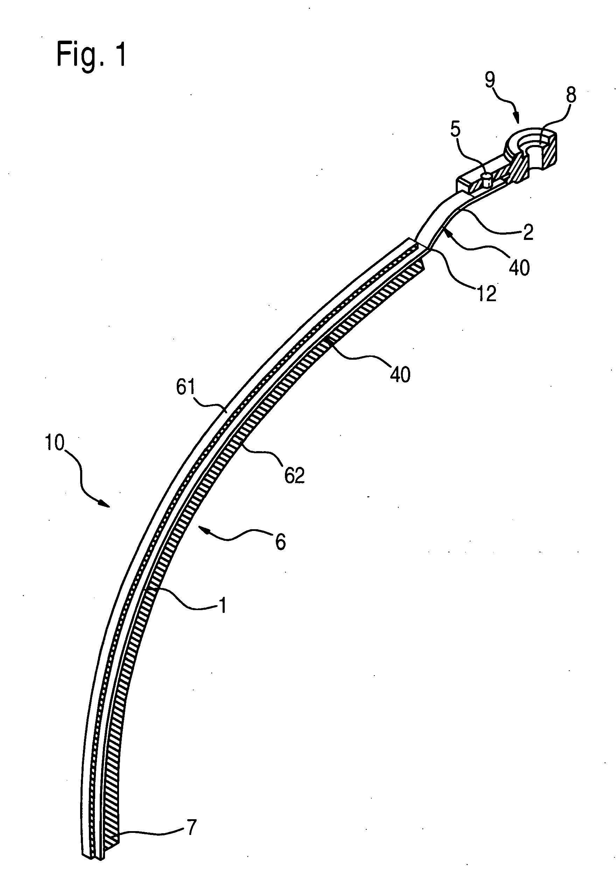

Elemente mit gleicher Funktion und Wirkungsweise sind in den Figuren 1 mit 5 jeweils mit denselben Bezugszeichen versehen.

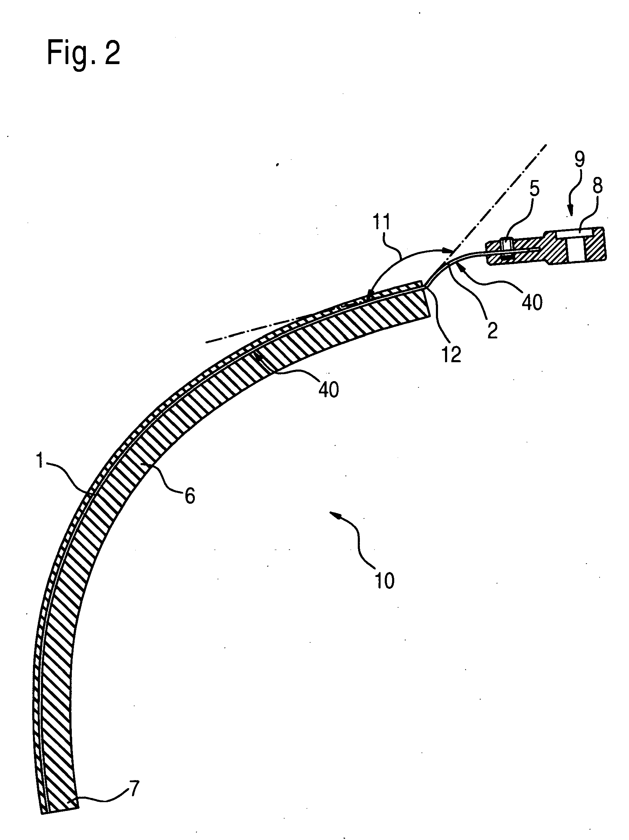

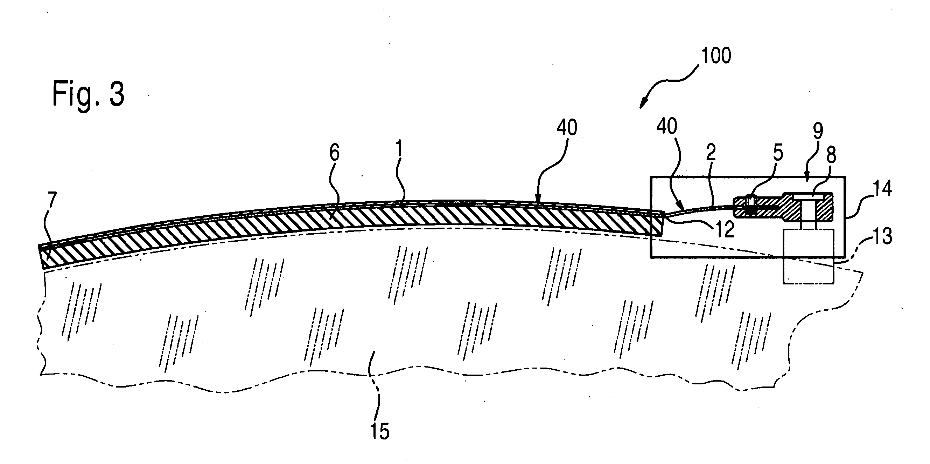

Die Figur 1 zeigt schematisch in perspektivischer Darstellung einen ersten Scheibenwischerarm 10, im entspannten Zustand vor der Montage an eine Schwenk- bzw. Antriebsvorrichtung 13. In der Figur 2 ist dieser Scheibenwischerarm 10 in Seitenansicht schematisch abgebildet. Die Figur 3 zeigt schematisch in Seitenansicht den ersten Scheibenwischerarm 10 von Figur 2 im Andruckzustand auf einer Fahrzeugscheibe 15 nach der Montage an die Schwenkvorrichtung 13. Er ist dort im montierten Zustand mit 100 bezeichnet. Er weist eine langgestreckte, einstückige Wischerstange 40 auf, an deren frei abstehendem ersten Wischerstangenabschnitt 1 ein Wischerblatt 6 zum Wischen einer Scheibe, insbesondere Fahrzeugscheibe, angebracht ist. Das Wischerblatt 6 ist dabei insbesondere durch ein Gummiprofilelement gebildet. Die Wischerstange 40 setzt sich aus dem frei abstehenden, ersten bogenförmigen Wischerstangenabschnitt 1 mit einem ersten, weitgehend kontinuierlichen Krümmungsverlauf, an dem das Wischerblatt 6 anbringbar ist, und aus mindestens einem zweiten bogenförmigen Wischerstangenabschnitt 2 mit einem zweiten, weitgehend kontinuierlichen Krümmungsverlauf zusammen, der sich an den ersten Wischerstangenabschnitt 1 unter Bildung einer Abknickstelle 12 anschließt. Der erste und der zweite bogenförmige Wischerstangenabschnitt 1, 2 sind vorzugsweise aus einem einstückigen Metallband, das ursprünglich geradlinig verläuft, durch mindestens einen Biegeprozess oder Ausstanzprozess geformt. Selbstverständlich sind die beiden einteilig zusammenhängenden Wischerstangenabschnitte auch durch einen Trägerstreifen aus einem anderen geeigneten Werkstoff wie z.B. Kunststoff oder Karbon durch entsprechende Formprozesse herstellbar.

Jeder Wischerstangenabschnitt 1, 2 für sich selbst betrachtet ist dabei im wesentlichen kontinuierlich gebogen. Entlang einer Längsrandseite des streifen- bzw. bandartigen Profils des ersten Wischerstangenabschnitts 1 ist das Gummiprofilelement des Wischerblatts 6 aufgeklemmt. Insbesondere verläuft einer der beiden Längsränder des ersten Wischerstangenabschnitts 1 in einer Längsnut des Gummiprofilelements. Dabei umklammert das Gummiprofilelement einen Teil der Oberseite des ersten Wischerstangenelements 1 mit seinem oberen Profilstreifen 61. Es steht an der Unterseite des ersten Wischerstangenelements 1 mit einem zu dessen Oberseite im wesentlichen senkrecht verlaufenden Wischrand bzw. Steg 62 nach unten hin ab, der nach der Montage des Scheibenwischerarms 10 auf einer Fahrzeugscheibe 15 (siehe Figur 3) zum Wischen aufsetzt. Vorzugsweise kann das Wischerblatt 6 an dem ersten Wischerstangenabschnitt 1 wechselbar bzw. austauschbar montiert sein. Selbstverständlich ist alternativ auch eine fixe Befestigung des Wischerblatts an der Wischerstange möglich.

Zusätzlich kann es ggf. zweckmäßig sein, an der Oberseite des ersten Wischerstangenabschnitts 1 einen Spoiler anzubringen.

Um zu erreichen, dass der erste Wischerstangenabschnitt 1 federnd, d.h. mit einer vorgebbaren Andruckpresskraft auf die Fahrzeugscheibe 15 im Scheibenwischerbetrieb drückt, ist an den ersten bogenförmigen Wischerstangenabschnitt 1 mit einem vorgegebenen ersten Krümmungsverlauf der zweite bogenförmige Wischerstangenabschnitt 2 mit dem zweiten Krümmungsverlauf über eine Abknickstelle 12 angebracht. Die Abknickstelle 12 bildet dabei hinsichtlich der kontinuierlichen Krümmungsverläufe des ersten und des zweiten Wischerstangenabschnitts 1, 2 eine Art Unstetigkeitsstelle. Insbesondere ist dabei der Krümmungsverlauf des ersten Wischerstangeabschnitts 1 vom Krümmungsverlauf des zweiten Wischerstangenabschnitts 2 verschieden. Allerdings weist hier im nicht beanspruchten Ausführungsbeispiel von Figur 1 der zweite bogenförmige Wischerstangenabschnitt 2 denselben Krümmungssinn wie der ersten bogenförmige Wischerstangenabschnitt auf. Denn sie sind jeweils konvex gekrümmt bzw. vorgebogen. Im einzelnen weist der erste bogenförmige Wischerstangenabschnitt 1 im Bereich seines frei abstehenden Endes 7 einen größeren radialen Krümmungsradius als im Bereich der Abknickstelle 12 auf. Für den zweiten bogenförmigen Wischerstangenabschnitt 2 ist im Bereich der Abknickstelle 12 ein kleinerer radialer Krümmungsradius als im Bereich seines Endes vorgesehen, das zur Ankopplung an eine Schwenkvorrichtung 13 (siehe Figur 3) dient. Im Bereich der Abknickstelle bzw. unstetigen Übergangszone 12 schließen die tangentiale Verlängerung des ersten bogenförmigen Wischerstangenabschnitts 1 und die tangentiale Verlängerung des zweiten bogenförmigen Wischerstangenabschnitts 2 auf der der Wischkante bzw. dem Wischrand 62 des Wischerblatts 6 gegenüberliegenden Seite betrachtet zweckmäßigerweise einen Winkel 11 zwischen 90° und 180°, insbesondere um etwa 150°, zwischen sich ein. Der erste bogenförmige Wischerstangenabschnitt 1 ist entlang seinem Krümmungsverlauf länger, insbesondere zwischen 100 mm und 10000 mm länger, als der zweite bogenförmige Wischerstangenabschnitt 2 entlang dessen Krümmungsverlauf ausgebildet.

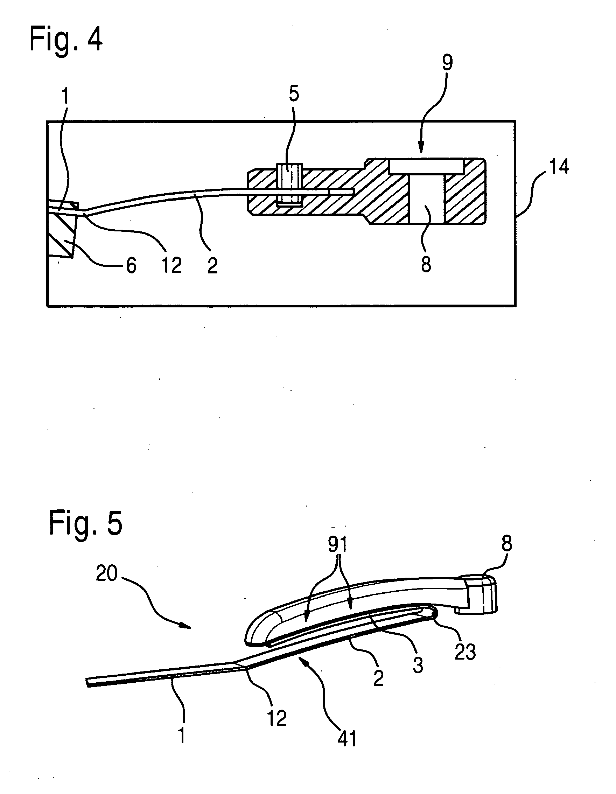

Am dem freien Ende 7 der Wischerstange 12 gegenüberliegenden Ende des zweiten Wischerstangenabschnitts ist ein Anschlusselement 9 - vorzugsweise wechselbar - anbringbar, mit dem die Wischerstange 12 an die Schwenkvorrichtung 13 ankoppelbar ist. Figur 4 zeigt dieses Anschlusselement 9 am zweiten Wischerstangenabschnitt 2 als Detail des Scheibenwischerarms 12 von Figur 3. Diese Einzelheit ist dabei in den Figuren 3, 4 jeweils durch eine Umrahmung mit dem Bezugszeichen 14 kenntlich gemacht. Das Anschlusselement 9 weist zum Anklemmen an den Endabschnitt des zweiten Wischerstangenabschnitts 2 ein Steck-, insbesondere Bolzenelement 5 auf, dass in eine zugehörige Bohrung am zweiten Wischerstangenabschnitt 2 eingreift und dort verrastbar ist. Gleichzeitig umgreift es einen der beiden Längsränder des zweiten Wischerstangenabschnitts 2 entlang einer Teillänge vom stirnseitigen Ende her. Dazu ist es mit einer Längsnut versehen. Insbesondere ist das Anschlusselement 9 am Endabschnitt des zweiten Wischerstangenabschnitts 2 von Hand wechselbar, d.h. austauschbar, angebracht. Vorzugsweise ist es mit Hilfe eines so genannten "Klicksystems" an dem zweiten Wischerstangenabschnitt 2 befestigt.

Weiterhin weist das Anschlusselement ein Fixierelement 8 auf, mit dem das freie Ende des zweiten Wischerstangenabschnitts 2 mit der Schwenkvorrichtung 13, insbesondere einem Motorantrieb, verbindbar ist. Das Fixierelement 8 kann beispielsweise durch ein hülsenartiges Profilelement gebildet sein, das auf einen konischen Schaft an der Antriebswelle der Schwenkvorrichtung 13 mit Reibschluss aufsteckbar ist und dort insbesondere unter Zuhilfenahme eines Bolzens oder einer Schraube arretierbar ist. Zweckmäßigerweise kann der Steckmechanismus so ausgebildet sein, dass der Scheibenwischerarm 10 von der Schwenkvorrichtung nach Lösen des Bolzens oder Schraube von Hand abziehbar bzw. lösbar ist, so dass ein Wechsel bzw. Austausch durch einen neuen Scheibenwischerarm problemlos möglich ist.

Insgesamt betrachtet setzt sich somit der erste Scheibenwischerarm lediglich aus einer einteiligen Wischerstange mit einem ersten und zweiten bogenförmigen Wischerstangenabschnitt, die eine Abknickstelle zwischen sich aufweisen, einem am frei abstehenden, ersten Wischerstangenabschnitt angebrachten Wischerblatt, insbesondere einem Gummiprofilelement mit oder ohne Spoiler, und einem Anschlusselement am Endabschnitt des zweiten Wischerstangenelements zusammen. Dadurch ist ein vollständig gelenkfreier Scheibenwischerarm bereitgestellt, der sich während seiner Schwenkbewegung dennoch mit ausreichend großem Anpressdruck an eine Fahrzeugscheibe federnd andrücken lässt. Denn durch den zweiten Wischerstangenabschnitt mit der Abknickstelle im Übergangsbereich zum ersten Wischerstangenabschnitt des Scheibenwischerarms lässt sich trotz dem Fehlen von echten Gelenken eine ausreichend hohe Anpressdruckkraft wie bei einer herkömmlichen Wischerstange mit Gelenk auf die Fahrzeugscheibe im Schwenkbetrieb ausüben. Durch die Gelenkfreiheit und Einteiligkeit der Wischerstange des Scheibenwischerarms lässt sich zudem Gewicht einsparen, d.h. der Scheibenwischerarm ist in Leichtbauweise herstellbar. Da der Scheibenwischerarm somit nur wenige Komponenten aufweist, lässt er sich kostengünstig und schnell in großen Stückzahlen fertigen. Aufgrund der einstückigen Ausbildung der Wischerstange ist diese gegenüber mechanischen Beanspruchungen weitgehend unempfindlich. Außerdem ist deren Lagerhalterung vereinfacht. Ferner ist es einfacher möglich, den Scheibenwischerarm mit der reduzierten Anzahl von Komponenten an der jeweiligen Schwenkvorrichtung eines Fahrzeugs zu montieren und wieder zu lösen. Insbesondere entfällt der Zusammenbau bzw. das Zusammenstecken von Befestigungsteil, Abklappgelenk, Gelenkteil, Wischerstange, und Anschlussstück am Wischerblatt, wie dies bei einem herkömmlichen Scheibenwischerarm erforderlich wäre. Stattdessen genügt es jetzt in vorteilhafter Weise, den Scheibenwischerarm aus dem einteiligen Wischerstangenarm mit dem ersten und dem mindestens zweiten Wischerstangenabschnitt und einem wechselbaren Anschlusselement zum Ankoppeln an eine Schwenkvorrichtung, insbesondere an einen Motorantrieb, zusammenzusetzen. Dabei ist das eigentliche Wischerblatt, insbesondere ein Gummiprofilelement mit oder ohne Spoiler, am ersten Wischerstangenabschnitt zweckmäßigerweise vormontiert, oder es lässt sich dort in vorteilhafter Weise wechselbar aufstecken.

Figur 5 zeigt einen Teilausschnitt eines zweiten Scheibenwischerarms 20, der gegenüber dem ersten Scheibenwischerarm 10 der Figuren 1 mit 4 modifiziert ist. Im Unterschied zum ersten Scheibenwischerarm 10 weist der zweite Scheibenwischerarm 20 eine Wischerstange 41 auf, die am Anschlussende ihres zweiten Wischerstangenabschnitts 2 auf einer Teillänge umgebogen ist. Dieser umgebogene, endseitige Teilabschnitt des zweiten Wischerstangenabschnitt ist ebenfalls kontinuierlich gebogen und in der Figur 5 mit 3 bezeichnet. Er ist oberhalb der Lageebene des zweiten Wischerstangenabschnitts 2 angeordnet. Seine gedachte Projektion in die Lageebene des zweiten Wischerstangeabschnitts 2 verläuft im wesentlichen kongruent zu diesem. Im entspannten Vormontagezustand ist der umgebogene Endabschnitt 3 des zweiten Wischerstangenabschnitts 2 gegenüber diesem um einen Winkel zwischen 0° und 60°, insbesondere um 20°, umgebogen. Im Montagezustand unter Andruck auf die Fahrzeugscheibe wird der umgebogene Endabschnitt 3 in Richtung auf den zweiten bogenförmigen Wischerstangenabschnitt 2 zu vorzugsweise derart federnd gedrückt, dass beide zwischen sich einen Winkel von etwa 180° einschließen. Dieser Montagezustand ist in der Figur 5 gezeigt. Dabei liegt der umgebogene Endabschnitt 3 in einer Schichtebene oberhalb der Lageebene des zweiten bogenförmigen Wischerstangenabschnitts 2 im wesentlichen kongruent zu dessen endseitigem Verlaufsabschnitt. Er verläuft dort also im wesentlichen mit demselben Krümmungsverlauf wie der zweite Wischerstangenabschnitt 2. Zwischen dem zweiten Wischerstangenabschnitt 2 und seinem umgebogenen Endabschnitt 3 ist eine Abknickstelle 23 gebildet. Damit ist insgesamt betrachtet eine modifizierte Wischerstange 41 bereitgestellt, die sich aus drei zusammenhängenden, bogenförmigen Wischerstangenabschnitten 1, 2, 3 zusammensetzt, wobei zwischen je zwei benachbarten, d.h. aufeinander folgenden Wischerstangenabschnitten jeweils eine Abknickstelle bzw. Unstetigkeitsstelle liegt.

Alternativ kann der umgebogene Endabschnitt 3 natürlich auch in einer Lageebene unterhalb dem zweiten Wischerstangenabschnitt 2 vorgesehen sein.

Der umgebogene Endabschnitt 3 und der zweite bogenförmige Wischerstangenabschnitt 2 bilden dabei ein zweispeichiges Doppelfedersystem, d.h. eine Doppelschwinge, die eine federnde Aufhängung der Wischerstange 41 an der Antriebseinheit erlaubt.

Vorzugsweise wird die modifizierte Wischerstange 41 aus einem ursprünglich im wesentlich geradlinig verlaufenden Metallband bzw. Metallstreifen durch entsprechende Umbiege- und/oder Stanzschritte hergestellt.

Im Unterschied zum ersten Scheibenwischerarm 10 ist im Ausführung gemäß der Erfindung von Figur 5 jetzt am umgebogenen Endabschnitt 3, d.h. am dritten Wischerstangenabschnitt 3, ein Anschlusselement 91 wechselbar angebracht. Vorzugsweise weist es einen so genannten "Klickmechanismus" zum Ankoppeln an den dritten Wischerstangenabschnitt 3 auf. Zur Montage an der Schwenkvorrichtung 13, insbesondere Antriebseinheit, ist der Arretiermechanismus 8 entsprechend dem Fixiermittel des ersten Scheibenwischerarms 10, insbesondere von Hand wechselbar, ausgebildet.

Auf diese Weise wirkt der dritte Wischerstangenabschnitt 3 am Anschlusselement 91 zur Schwenkvorrichtung 13 in der Art einer Federschwinge für das Wischerblatt 6 am frei abstehenden, ersten Wischerstangenabschnitt 1. Dadurch können Vibrationen und Winkelvariationen bei den Schwenkbewegungen des Scheibenwischerarms 20 weitgehend kompensiert, insbesondere abgefangen werden. Es sind somit insbesondere unerwünschte "Rütteleffekte" des Wischerblatts 6 des Scheibenwischerarms 20 beim Gleiten über die Fahrzeugscheibe (wie z.B. 15 in Figur 3) weitgehend vermieden.

Alternativ zur Biege- und/oder Stanzherstellung aus einem Metallband lässt sich die jeweilige Wischerstange auch aus einem federnden Kunststoffmaterial oder einem sonstigen geeigneten Werkstoff fertigen. Bei Verwendung von Kunststoff lässt sich die jeweilige Wischerstange insbesondere durch übliche Kunststoff-Spritzverfahren herstellen.

Weiterhin kann es ggf. zweckmäßig sein, die Wischerstange so zu konstruieren, dass sie in Verallgemeinerung mehr als zwei bogenförmige Wischerstangenabschnitte aufweist, die in Längsrichtung hintereinander gesetzt sind und jeweils an einer Abknickstelle aneinandergrenzen.

## Patentansprüche

1. Scheibenwischerarm (10) mit einer Wischerstange zum Anbringen eines Wischerblatts (6) mit oder ohne Spoiler,
wobei, sich die Wischerstange (40) aus einem frei abstehenden, ersten bogenförmigen Wischerstangenabschnitt (1) mit einem ersten Krümmungsverlauf, an dem das Wischerblatt(6) anbringbar ist, und aus mindestens einem zweiten bogenförmigen Wischerstangenabschnitt (2) mit einem zweiten bogenförmigen Krümmungsverlauf zusammensetzt, der sich an den ersten Wischerstangenabschnitt (1) unter Bildung einer Abknickstelle (12) anschließt,
**dadurch gekennzeichnet,**
**dass** der zweite bogenförmige Wischerstangenabschnitt (2) endseitig in einen bogenförmigen Wischerstangenabschnitt (3) in Form eines zweispeichigen Doppelfedersystems umgebogen ist, bei dem im Andruckzustand des Scheibenwischerarms der umgebogene Wischerstangenabschnitt (3) in einer Schichtebene oberhalb oder unterhalb der Lageebene des zweiten bogenförmigen Wischerstangenabschnitts (2) verläuft, wobei der zweite bogenförmige Wischerstangenabschnitt (2) im Wesentlichen kongruent zum umgebogenen Wischerstangenabschnitt (3) sowie etwa mit demselben Krümmungsverlauf wie der umgebogene Wischerstangenabschnitt (3) entlang einem vorgebbaren Längsabschnitt verläuft.

2. Scheibenwischerarm nach Anspruch 1,
**dadurch gekennzeichnet,**
**dass** der erste und der zweite bogenförmige Wischerstangenabschnitt (1, 2) aus einem einstückigen Metallband, das ursprünglich geradlinig verläuft, durch mindestens einen Biegeprozess oder Ausstanzprozess geformt sind.

3. Scheibenwischerarm nach Anspruch 1 oder 2,
**dadurch gekennzeichnet,**
**dass** der zweite bogenförmige Wischerstangenabschnitt (2) denselben Krümmungssinn wie der ersten bogenförmige Wischerstangenabschnitt (1) aufweist.

4. Scheibenwischerarm nach Anspruch 3,
**dadurch gekennzeichnet,**
**dass** der erste bogenförmige Wischerstangenabschnitt (1) sowie der zweite bogenförmige Wischerstangenabschnitt (2) jeweils konvex gekrümmt sind.

5. Scheibenwischerarm nach einem der vorhergehenden Ansprüche,
**dadurch gekennzeichnet,**
**dass** der erste bogenförmige Wischerstangenabschnitt (1) im Bereich seines frei abstehenden Endes (7) einen größeren radialen Krümmungsradius als im Bereich der Abknickstelle (12) aufweist.

6. Scheibenwischerarm nach einem der vorhergehenden Ansprüche,
**dadurch gekennzeichnet,**
**dass** der zweite bogenförmige Wischerstangenabschnitt (2) im Bereich der Abknickstelle (12) einen kleineren radialen Krümmungsradius als im Bereich seines Endes aufweist, das zur Ankopplung an eine Schwenkvorrichtung (13) vorgesehen ist.

7. Scheibenwischerarm nach einem der vorhergehenden Ansprüche,
**dadurch gekennzeichnet,**
**dass** die tangentiale Verlängerung des ersten bogenförmigen Wischerstangenabschnitts (1) und die tangentiale Verlängerung des zweiten bogenförmigen Wischerstangenabschnitts (2) im Bereich der Abknickstelle (12) auf der der Wischkante des Wischerblatts (6) gegenüberliegenden Seite betrachtet zwischen sich einen Winkel (11) zwischen 90° und 180 °, insbesondere um etwa 150°, einschließen.

8. Scheibenwischerarm nach einem der vorhergehenden Ansprüche,
**dadurch gekennzeichnet,**
**dass** der erste bogenförmige Wischerstangenabschnitt (1) entlang seinem Krümmungsverlauf länger, insbesondere zwischen 100 mm und 10000 mm länger als der zweite bogenförmige Wischerstangenabschnitt (2) entlang dessen Krümmungsverlauf ausgebildet ist.

9. Scheibenwischerarm nach einem der vorhergehenden Ansprüche,
**dadurch gekennzeichnet,**
**dass** an dem dem freien Ende (7) der Wischerstange (40) gegenüberliegende Ende ein Anschlusselement (9) wechselbar anbringbar ist, mit dem die Wischerstange (40) an eine Schwenkvorrichtung (13) ankoppelbar ist.

10. Scheibenwischerarm nach einem der vorhergehenden Ansprüche,
**dadurch gekennzeichnet,**
**dass** das Anschlusselement (9) am umgebogenen Wischerstangenabschnitt (3) des zweispeichigen Doppelfedersystems federnd anbringbar ist.

## Claims

1. Windscreen wiper arm (10) with a wiper rod for attachment of a wiper blade (6) with or without a spoiler, wherein the wiper rod (40) is composed of a freely protruding, first arcuate wiper rod portion (1) having a first curvature profile, to which the wiper blade (6) can be attached, and of at least one second arcuate wiper rod portion (2) with a second arcuate curvature profile, which adjoins the first wiper rod portion (1), with a snap-off point (12) being formed, **characterized in that** the second arcuate wiper rod portion (2) is bent over on the end side into an arcuate wiper rod portion (3) in the form of a two-spoke double spring system, in which, in the pressed-on state of the windscreen wiper arm, the bent-over wiper rod portion (3) runs in a layer plane above or below the positional plane of the second arcuate wiper rod portion (2), the second arcuate wiper rod portion (2) running substantially congruently to the bent-over wiper rod portion (3) and approximately with the same curvature profile as the bent-over wiper rod portion (3) along a specifiable longitudinal portion.

2. Windscreen wiper arm according to Claim 1, **characterized in that** the first and the second arcuate wiper rod portions (1, 2) are formed from a single-piece metal band, which originally has a rectilinear profile, by means of at least one bending process or punching-out process.

3. Windscreen wiper arm according to Claim 1 or 2, **characterized in that** the second arcuate wiper rod portion (2) has the same direction of curvature as the first arcuate wiper rod portion (1).

4. Windscreen wiper arm according to Claim 3, **characterized in that** the first arcuate wiper rod portion (1) and the second arcuate wiper rod portion (2) are each curved convexly.

5. Windscreen wiper arm according to one of the preceding claims, **characterized in that** the first arcuate wiper rod portion (1) has a greater radial radius of curvature in the region of the freely protruding end (7) thereof than in the region of the snap-off point (12).

6. Windscreen wiper arm according to one of the preceding claims, **characterized in that** the second arcuate wiper rod portion (2) has a smaller radial radius of curvature in the region of the snap-off point (12) than in the region of the end thereof, which is provided for coupling to a pivoting device (13).

7. Windscreen wiper arm according to one of the preceding claims, **characterized in that** the tangential extension of the first arcuate wiper rod portion (1) and the tangential extension of the second arcuate wiper rod portion (2) enclose an angle (11) of between 90° and 180°, in particular approximately 150°, in the region of the snap-off point (12), as viewed on the side opposite the wiping edge of the wiper blade (6).

8. Windscreen wiper arm according to one of the preceding claims, **characterized in that** the first arcuate wiper rod portion (1) is designed to be longer along the curvature profile thereof, in particular between 100 mm and 10 000 mm longer than the second arcuate wiper rod portion (2) along the curvature profile thereof.

9. Windscreen wiper arm according to one of the preceding claims, **characterized in that** a connecting element (9) with which the wiper rod (40) can be coupled to a pivoting device (13) can be attached exchangeably to the end opposite the free end (7) of the wiper rod (40).

10. Windscreen wiper arm according to one of the preceding claims, **characterized in that** the connecting element (9) can be attached resiliently to the bent-over wiper rod portion (3) of the two-spoke double spring system.

## Revendications

1. Bras d'essuie-glace (10) comprenant une barre d'essuie-glace pour le montage d'un balai d'essuie-glace (6) avec ou sans déflecteur, la barre d'essuie-glace (40) se composant d'une première portion de barre d'essuie-glace (1) de forme courbe saillant librement avec une première courbure, sur laquelle le balai d'essuie-glace (6) peut être monté, et d'au moins une deuxième portion de barre d'essuie-glace (2) de forme courbe, avec une deuxième courbure, qui se raccorde à la première portion de barre d'essuie-glace (1) en formant un point d'inflexion (12),
**caractérisé en ce que**
la deuxième portion de barre d'essuie-glace (2)de forme courbe est recourbée du côté de son extrémité en une portion de barre d'essuie-glace (3) de forme courbe en forme de système à double ressort à deux rayons, dans lequel, dans l'état de compression du bras d'essuie-glace, la portion de barre d'essuie-glace (3) recourbée s'étend dans un plan de couche au-dessus ou en dessous du plan de position de la deuxième portion de barre d'essuie-glace (2) de forme courbe, la deuxième portion de barre d'essuie-glace (2)de forme courbe s'étendant essentiellement de manière coïncidente avec la portion de barre d'essuie-glace (3) recourbée et approximativement avec la même courbure que la portion de barre d'essuie-glace (3) recourbée le long d'une portion longitudinale prédéfinissable.

2. Bras d'essuie-glace selon la revendication 1,
**caractérisé en ce que**
la première et la deuxième portion de barre d'essuie-glace (1, 2) de forme courbe sont formées d'une bande métallique d'une seule pièce, qui s'étend initialement en ligne droite, par au moins un processus de cintrage ou d'estampage.

3. Bras d'essuie-glace selon la revendication 1 ou 2,
**caractérisé en ce que**
la deuxième portion de barre d'essuie-glace (2) de forme courbe présente le même sens de courbure que la première portion de barre d'essuie-glace (1) de forme courbe.

4. Bras d'essuie-glace selon la revendication 3,
**caractérisé en ce que**
la première portion de barre d'essuie-glace (1) de forme courbe ainsi que la deuxième portion de barre d'essuie-glace (2) de forme courbe sont à chaque fois courbées de manière convexe.

5. Bras d'essuie-glace selon l'une quelconque des revendications précédentes,
**caractérisé en ce que**
la première portion de barre d'essuie-glace (1) de forme courbe présente, dans la région de son extrémité (7) saillant librement, un plus grand rayon de courbure radial que dans la région du point d'inflexion (12).

6. Bras d'essuie-glace selon l'une quelconque des revendications précédentes,
**caractérisé en ce que**
la deuxième portion de barre d'essuie-glace (2) de forme courbe présente, dans la région du point d'inflexion (12), un plus petit rayon de courbure radial que dans la région de son extrémité, qui est prévue pour l'accouplement à un dispositif de pivotement (13).

7. Bras d'essuie-glace selon l'une quelconque des revendications précédentes,
**caractérisé en ce que**
le prolongement tangentiel de la première portion de barre d'essuie-glace (1) de forme courbe et le prolongement tangentiel de la deuxième portion de barre d'essuie-glace (2) de forme courbe dans la région du point d'inflexion (12), considérés du côté opposé à l'arête de balayage du balai d'essuie-glace (6), forment entre eux un angle (11) compris entre 90° et 180°, notamment d'environ 150°.

8. Bras d'essuie-glace selon l'une quelconque des revendications précédentes,
**caractérisé en ce que**
la première portion de barre d'essuie-glace (1) de forme courbe est réalisée le long de sa courbure de manière plus longue, notamment plus longue de 100 mm à 10 000 mm que la deuxième portion de barre d'essuie-glace (2) de forme courbe le long de sa courbure.

9. Bras d'essuie-glace selon l'une quelconque des revendications précédentes,
**caractérisé en ce**
**qu'**un élément de raccordement (9) peut être monté de manière remplaçable sur l'extrémité opposée à l'extrémité libre (7) de la barre d'essuie-glace (40), et permet de raccorder la barre d'essuie-glace (40) à un dispositif de pivotement (13).

10. Bras d'essuie-glace selon l'une quelconque des revendications précédentes,
**caractérisé en ce que**
l'élément de raccordement (9) peut être monté de manière élastique sur la portion de barre d'essuie-glace (3) recourbée du système à double ressort à deux rayons.
